# EUROPEAN PATENT SPECIFICATION

(11) **EP 2 739 586 B1**
(45) Date of publication and mention of the grant of the patent: **04.01.2017**
(21) Application number: 12751447.9
(22) Date of filing: 31.07.2012
(51) Int. Cl.: C04B 20/00, C04B 111/23, C04B 111/56, C04B 28/06

(54) **CEMENT MATERIAL WITH HIGH MECHANICAL PERFORMANCES USEFUL FOR PRODUCING UNDERGROUND JUNCTIONS**
ZEMENTMATERIAL MIT HOHEN MECHANISCHEN EIGENSCHAFTEN ZUR HERSTELLUNG VON UNTERIRDISCHEN ÜBERGÄNGEN
MATÉRIAU DE CIMENT À HAUTES PERFORMANCES MÉCANIQUES UTILE POUR LA PRODUCTION DE JONCTIONS SOUTERRAINES

(30) Priority: 01.08.2011 IT MI20111470
(43) Date of publication of application: 11.06.2014
(73) Proprietor: ITALCEMENTI S.p.A., 24121 Bergamo (IT)
(72) Inventor: ALFANI, Roberta, I-24128 Bergamo (IT); GHEZZI, Alberto, I-24020 Scanzorosciate (Bergamo) (IT)
(74) Representative: Gerli, Paolo
(86) International application number: PCT/EP2012/003262
(87) International publication number: WO 2013/017269

(56) References cited:
- EP-A1- 1 364 926
- WO-A2-2005/080289
- CA-A1- 2 555 619

## Description

### FIELD OF THE INVENTION

The present invention relates to cement formulations with high mechanical performances for the preparation of underground junctions.

### STATE OF THE ART

Concrete is one of the most used materials for the production of sewer tubes and discharge systems; it has a convenient mechanical resistance, but it is quite sensitive to acid etching, so that its use is suggested with pHs higher than 4-5 to avoid inner surface degradation problems.

New extruded cement-material tubes for sewage systems with small thickness have been recently developed: these products are preferable due to the lower weight and the greater handiness, said features being useful for transport and laying; however the small thickness (e.g. 20-25 mm, with a nominal diameter DN = 300 mm) requires high values of mechanical resistance and, possibly, also to acids, which are not guaranteed by traditional cementitious materials.

The research thus aims at obtaining cementitious materials for thin tubes, having improved mechanical and, possibly, chemical resistance to acids.

At present cementitious coatings with improved acid resistance are available, though with modest mechanical features; cf. e.g. the sulfoaluminous or sulfo-iron-aluminous clinker-based solid mixtures for the preparation of acid-resistant products, described in WO2009/095734; these materials do not excel in mechanical resistances, and their use as a material for tubes, especially low-thickness ones, is difficult; in particular this mixture, when used to obtain a tube junction, leads to articles of manufacture with poor mechanical properties, below the limits imposed by the rule UNI EN 588-1.

Cementitious materials with a high mechanical resistance are also known, yet not particularly protected against acid corrosion.

Therefore, tubes made of traditional cementitious materials, are exposed to considerable risks of degradation and breaking over time.

Said problems are particularly evident when producing the cementitious junctions connecting said tubes. In fact, while tubes can be conveniently prepared by extrusion, junctions have a complex shape not obtainable by this procedure: they are prepared by casting through pouring of mortars in suitable molds: for this purpose a cementitious product with a high fluidity and pourability is required, such as to evenly fill in all the mold gaps. Examples of these products are described in the patent applications WO2005/080289 and CA 255 619; their mechanical resistances are however not convenient for the preparation of articles of manufacture with small thickness.

Facing these problems, at present the only realistic solution is to replace the cementitious material with different materials, e.g. gres; gres tubes show, according to the directions of the rule UNI EN 295 3^{rd} part, a high durability when submitted to the aggressive action of highly acid environments, and a good mechanical resistance; however these materials have a generally higher cost.

The need is thus still felt for new cementitious materials, which are useful for the preparation of ducts, especially small-thickness ones, and particularly junctions, having a high mechanical resistance and, possibly also acid resistance.

### SUMMARY

The present invention pursues the aim of providing a new high-performance material for cementitious junctions, particularly useful for small-thickness junctions. The invention also aims at improving the quality of underground tubes for the transport of fluids, by improving the mechanical and, possibly, acid resistance in correspondence of their junctions. The invention also aims at providing an improved method for laying and installing tubes, characterized by the use of cementitious junctions, even with small thickness, being precisely delineated, with a low weight, easily transportable and handy, with good joint quality, particularly as regards the mechanical and, possibly, acid resistance. A further aim is to provide a process to prepare cementitious junctions having the above-mentioned features. These and other aims are achieved by a new cement composition comprising a hydraulic binder, preferably of sulfoaluminous type, a superfluidifying agent, and an aggregate having a specific granulometric distribution: this distribution is obtained by mixing together at least two fractions, in amounts similar or equal to each other, having an average diameter X₀ > 0.5 and at least two fractions, in amounts similar or equal to each other, having an average diameter X₀ < 0.5. The fractions with X₀ > 0.5 represent from 20% to 50% by weight of the total aggregate; those with X₀ < 0.5 represent the remaining 50-80% by weight of the total aggregate.

Said compositions, suitably added with water, form mortars with a high fluidity / spreadability / pourability, particularly suitable for forming articles of manufacture by pouring; the articles of manufacture are characterized by high values of mechanical and, possibly, acid resistance. It is thus possible to form junctions and tubes with said material, particularly small-thickness ones, useful in the preparation of underground ducts, particularly sewer ducts.

### DETAILED DESCRIPTION OF THE INVENTION

The term "hydraulic binder" used herein identifies a powdered material at the solid dry state which, mixed with water, provides plastic mixtures which can set and harden, even under water, such as a cement, e.g. Portland cement; among the various binders useful for the aims of the invention we can mention white, gray or pigmented cements defined according to the rule UNI EN 197.1, the so-called retaining barrage cements, cementitious agglomerates and hydraulic limes as defined in the Italian law of May 26, 1965 N. 595, inorganic silicates, etc.

Hydraulic binders are typically obtained by cooking a suitable clinker, for example a Portland clinker.

In a preferred embodiment of the invention, sulfoaluminous hydraulic binders commonly known in the field are used. They are generally characterized by a calcium sulfoaluminate phase (C₄A₃S or Klein phase); the other phases are generally C₂S, C₄AF, CA, CA₂. C₁₂A₇. CS and free lime. Preferred examples of sulfoaluminous binders are described in WO2006/18569, EP 1306356, MI 2010A002110 and EP 181739; other preferred binders are those derived from the calcium sulfoaluminous clinkers described in the Review "Green Chemistry for sustainable cement production and Use" by John W. Phair Green Chem., 2006, 8, 763-780, particularly in chapter 5.3 page 776, and also by calcium sulfoaluminous clinkers described in the article "Calcium solfoaluminates cements-low energy cements, special cements" J.H. Sharp et to., Advances in Cement Research, 1999, 11, n.1, pp. 3-13. In alternative, aluminous, sulfo-iron-aluminous cements can be used as described in Advances in Cement Research, 1999, 11, No. 1, Jan.,15-21. In a particularly preferred embodiment of the invention the sulfoaluminous cement Alipre® Cement by Italcementi is used as a binder. The use of sulfoaluminous binders increases the acid-resistance features of the product.

The superfluidifying agent can be chosen indifferently among the known substances having this function; in particular, it is possible to use a polycarboxylic superfluidifying agent. In a preferred aspect of the invention a polycarboxylic superfluidifying agent is used such as Mighty 21 PSD by KAO, or Cimfluid Adagio P1 by Axim France, or Melflux 1641F by BASF.

The aggregates according to the present invention (also definable as inerts or inert aggregates) can be conveniently chosen from various sources: calcareous, silico-calcareous aggregates, aggregates of quartz, of marble, of any shape (crushed, spherical), for example marble sawdusts, and also of the lightened type to reduce the weight of the final article of manufacture. In some cases, e.g. in the case of colored marble sawdusts, the aggregates also have an aesthetical function, and they can confer particular chromatic features and shades or veins to articles of manufacture, reproducing the aspect of natural stones.

An essential feature of the present invention is the granulometry of the aggregate, defined on the basis of the characteristic diameter X₀ , i.e. the mesh opening (mm) of the sieve in correspondence of which the cumulative passing for that given fraction is equal to 63.2%. The aggregate useful for the purpose of the invention derives from the composition of: (a) at least two fractions, in substantially equal amounts to each other, having an average diameter X₀>0.5and
(b) at least two fractions in substantially equal amounts to each other, having an average diameter Xo < 0.5.

Preferably: said fractions (a) are chosen among those with X₀ comprised between 0.5 and 2.5 mm; said fractions (b) are chosen among those with X₀ comprised between 0.06 and 0.5 mm.

The case in which said fractions (a) have the same value X₀ is meant to be excluded from the invention; the case in which said fractions (b) have the same value X₀ is also excluded.

Said fractions (a) differ from each other by at least 0.1 unit of X₀; moreover, said fractions (b) differ from each other by at least 0.1 unit of Xₒ.

The term "substantially equal" used herein identifies fractions in equal amounts to each other, or variable within a maximum interval of ±3%, with respect to the weight of the total aggregate.

The set of the fractions (a) represents from 20% to 50%, preferably from 30% to 40% by weight of the total aggregate; the set of the fractions (b) represents from 50% to 80%, preferably from 60% to 70% by weight of the total aggregate.

In a preferred embodiment of the invention, the set of the fractions (a) represents 34.5 ± 3% by weight of the total aggregate; the set of the fractions (b) represents 65.5 ± 3% by weight of the total aggregate.

Preferably: said fractions (a) are chosen among those with the following values of X₀: 0.73, 1.29, 1.80; said fractions (b) are chosen among those with the following values of X₀: 0.27, 0.42; all these values of X₀ are meant to be approximable by ± 0.07. preferably ± 0.05.

Fractions useful to compose the aggregate of the invention are the alluvial silico-calcareous aggregates by Sataf:
- the fraction called "113" (0.20-0.35 mm), having X₀ = 0.27;
- the fraction called "103" (0.60-0.80 mm), having X₀ = 0.73;
- the fraction called "117/R" (1.50-2.50 mm) having X₀ = 1.80
- the fraction called "117/ F" (1.00-1.5 mm) having X₀ = 1.29
   and the calcareous aggregate by Cremaschi:
   - called "powder" (0-0.8 mm), having X₀ = 0.42.

For simplicity in the examples according to the invention, these aggregates are respectively called A, B,C, D, E.

Optionally, the present cement compositions can contain one or more auxiliary substances usual in this field, such as for example fillers of mineral or pozzolanic origin, pigments of organic and/or inorganic nature or other. Mineral or pozzolanic fillers mean e.g. microsilica, silica fume, slag, fly ash, metakaolin, natural pozzolans, natural limestones, precipitated calcium carbonates, etc.

In addition to said components, the composition can contain various additives to modulate the features of the product to the specific purpose. Examples of these additives can be anti-shrinkage additives, set regulators, waterproofings, expansive agents, aerating agent, efflorescence-preventing agents, etc. The article of manufacture according to the present invention can also comprise anhydride or gypsum. The cementitious mixture of the invention can also comprise fibers of different nature, inorganic fibers, such as glass fibers and wollastonite, and organic fibers, such as those based on polyvinalcohol, polypropylene, etc., chosen in function of the final application.

The present compositions are conveniently provided as premixtures at the dry state; at the time of use they are mixed with water and the superfluidifying agent (added separately or pre-mixed together) forming a mortar; if the superfluidifying agent is already included in the premix, the mortar is formed by simply adding water.

The invention includes said dry premixes comprising said hydraulic binder and aggregate, and the possible superfluidifying agent.

Preferably in the premix the following are present: from 25 to 50, more preferably from 35 to 40 parts by weight of said binder; from 40 to 60, more preferably from 45 to 55 parts by weight of said aggregate; from 0.05 to 1.00 parts by weight of superfluidifying agent, when present in the premix, alternatively its parts by weight are added with the water at the time of mortar preparation.

The invention also includes a process for preparing said dry premix, characterized by mixing said hydraulic binder, aggregate and possible superfluidifying agent; the aggregate can be formed directly in this step by adding separately the different fractions (a) and (b) in the required proportions; or the aggregate is prepared separately by mixing together said fractions (a) and (b) and then added as such to the remaining components of the premix. Mixing is performed by standard apparatuses (for example a mixer of planetary type) and procedures; mixing lasts for a variable time, e.g. between 30 seconds and 5 minutes.

The invention also includes the corresponding fluid compositions (mortars) and the process to obtain them; such a process comprises mixing with suitable amounts of water (and superfluidifying agent when necessary) the components of the dry premix, up to homogeneity. Mixing lasts for a variable time, e.g. between 30 seconds and 10 minutes, in function of the used mixer and of the external temperature.

Pourable mortars particularly suitable for forming in molds are obtained by using from 5 to 15, more preferably from 11 to 12 parts by weight of water, with respect to said parts by weight of binder, aggregate and superfluidifying agent.

The water/binder ratio is preferably comprised between 0.05 and 1.0, more preferably between 0.1 and 0.5, even more preferably between 0.2 and 0.4, in particular about 0.3.

A further aspect of the invention is represented by cementitious manufactures, typically junctions, comprising in bulk the above defined composition, and by the process to obtain them. The term "junction" used herein means every article of manufacture having a shape suitable to connect one or more tubes. Said junctions can be typically, but not exclusively, obtained by pouring the above described mortars in suitable molds, followed by consolidation, forming and seasoning. Preferably metallic molds of the type used for cementitious applications are used, composed of two coupled halves whose internal surface is coated with silicone; the molds are typically supported in vertical position by rigid structures, e.g. out of gypsum.

The junctions are preferably those meant for underground laying, typically for sewage systems: the applicable thicknesses, diameters and lengths are those commonly used for these products. Among the types of junctions which can be produced according to the invention we can mention, for example, 90° elbows, bends with a bending angle between 90° and 45°, elbows with union, T-shaped elements, reductions, increases, etc.; preferably they have a small thickness.

The term "small thickness" used in the frame of the present invention indicates a thickness generally comprised between 10 and 50 mm, preferably between 15 and 30 mm, or between 20 and 25 mm; the articles of manufacture with such a thickness, obtained according to the invention, meet the requirements of mechanical performance defined by the rule UNI EN 588-1 and can thus be used safely.

The present invention gains a particular benefit from aggregates; when used in the above-mentioned proportions and granulometries, they have an important role, though not exclusive, in conferring high mechanical resistances to the finished article of manufacture (in particular high compressive and/or bending strength). Moreover, despite the considerable content of fine parts, with X₀ < 0.5, a high fluidity at the mortar state is obtained, without segregation phenomena. A particularly useful effect obtained herein is the very high initial fluidity, joined by a very quick consolidation rate: the initial high fluidity is advantageous for a homogeneous pouring of the mortar into molds and a fine reproduction of the mold contour and interstices; at the same time, the quicker consolidation rate, matched by the corresponding increase of mechanical resistance, allows an earlier disengagement of the molds, thus accelerating the production cycle. Moreover, unexpectedly, the high mortar fluidity does not sensibly affect the ultimate mechanical resistances of the finished article of manufacture, which remain good and within the norm values. A very fluid mortar is thus obtained, with a high spreadability, which is easily/rapidly pourable in molds, which precisely reproduces the shape of the mold in all the gaps thereof, and which leads to precisely-formed manufactures, in particular tubes and/or junctions, even of small thickness, provided with a high mechanical resistance, and possibly also acid resistant.

For a better comprehension of the features and advantages of the invention, some not limiting examples are reported hereafter.

### EXPERIMENTAL PART

### 1. Formation of the aggregates

For the composition of the aggregates according to the invention, the following fractions, available on the market, have been used:
A: alluvial silico-calcareous aggregate Sataf, fraction "113" (0.20-0.35 mm),
B: alluvial silico-calcareous aggregate Sataf, fraction "103" (0.60-0.80 mm)
C: alluvial silico-calcareous aggregate Sataf, fraction "117R" (1.50-2.50 mm)
D: calcareous aggregate Cremaschi, "powder" (0-0.8 mm)
E: alluvial silico-calcareous aggregate SATAF, fraction 117/F (1.0-1.5 mm)

**Table 1: Granulometric distribution of the fractions A, B, C, D, E.**

| **Diameter (mm)** | **A** | **B** | **C** | **D** | **E** |
|---|---|---|---|---|---|
| 2.8 | 100 | 100 | 100 | 100 | 100 |
| 2.36 | 100 | 100 | 97.6 | 100 | 100 |
| 2 | 100 | 100 | 87.3 | 100 | 100 |
| 1.7 | 100 | 100 | 41.8 | 100 | 99.4 |
| 1.4 | 100 | 100 | 8.3 | 100 | 88.5 |
| 1.18 | 100 | 100 | 1.3 | 100 | 36.6 |
| 1 | 100 | 99.8 | 0.3 | 100 | 7.8 |
| 0.8 | 100 | 91 | 0.3 | *na* | 0.7 |
| 0.6 | 100 | 26.5 | 0.3 | *na* | 0.2 |
| 0.5 | 100 | 6.4 | 0 | 76 | 0.1 |
| 0.425 | 100 | 2.6 | 0 | *na* | 0.1 |
| 0.3 | 85.2 | 0.1 | 0 | *na* | 0.1 |
| 0.25 | 51.8 | 0.1 | 0 | 48 | 0 |
| 0.212 | 30.2 | 0.1 | 0 | 41 | 0 |
| 0.15 | 13.3 | 0.1 | 0 | *na* | 0 |
| 0.125 | 4.3 | 0.1 | 0 | 33 | 0 |
| 0.1 | 2 | 0.1 | 0 | *na* | 0 |
| 0.075 | 0.3 | 0.1 | 0 | *na* | 0 |
| 0.063 | 0.1 | 0 | 0 | 23 | 0 |
| 0 | 0 | 0 | 0 | 0 | 0 |

| | | | | | |
|---|---|---|---|---|---|
| *Na* = *not available data* | | | | | |

Said fractions were mixed together in the proportions indicated hereafter, obtaining three different aggregates AG1, AG2, AG3, used afterwards in the preparation of mortars according to the present invention.

**Table 2: composition of the aggregate AG1**

| | **Fractions** | | | |
|---|---|---|---|---|
| | **A** | **B** | **C** | **D** |
| X₀ | 0.27 | 0.73 | 1.80 | 0.42 |
| % content in bulk in the aggregate solid mixture | 34.5 | 17.2 | 17.2 | 31.1 |

**Table 3: composition of the aggregate AG2**

| | **Fractions** | | | |
|---|---|---|---|---|
| | **A** | **B** | **C** | **D** |
| X₀ | 0.27 | 0.73 | 1.80 | 0.42 |
| % content in bulk in the aggregate solid mixture | 31.3 | 17.2 | 17.2 | 34.5 |

**Table 4: composition of the aggregate AG3**

| | **Fractions** | | | |
|---|---|---|---|---|
| | **A** | **B** | **E** | **D** |
| X₀ | 0.27 | 0.73 | 1.29 | 0.42 |
| % Content in bulk in the aggregate solid mixture | 34.4 | 17.2 | 17.2 | 31.2 |

### 2. Mortars 1- 5 according to the invention

The mortars useful for the invention were prepared by feeding in a suitably-operated mixer of the planetary type: a hydraulic binder, one of the above-prepared aggregates AG1-3, a superfluidifying agent, possible polypropylene fibers, and water. Mixing lasted about 2 minutes, at 20°C. Five samples of pourable mortars were thus produced, having the compositions described hereafter:

**Table 5: Composition of the mortar**

| | **Mortar 1** | **Mortar 2** | **Mortar 3** | **Mortar 4** | **Mortar 5** |
|---|---|---|---|---|---|
| Binder: Alipre T2 1%] | 37.2 | 37.0 | 37.0 | 40.0 | |
| Binder: CEM I 52.5 R [%] | | | | | 37.2 |
| Aggregate AG1 (0.2-2.5 mm) [%] | 51.3 | | 51.0 | | 51.3 |
| Aggregate AG2 (0.2-2.5 mm) [%] | | 51.1 | | | |
| Aggregate AG3 (0.2-1.5 mm) [%] | | | | 48.1 | |
| Superfluidifying agent: Mighty 21 PSD (KAO) [%] | 0.2 | | 0.2 | | 0.2 |
| Superfluidifying agent: Cimfluid Adagio P 1 (Axim) [%] | | 0.2 | | | |
| Superfluidifying agent Melflux 1641F (BASF) [%] | | | | 0.3 | |
| Polypropylene fibers [%] | | | 0.33 | | |
| Water | 11.3 | 11.3 | 11.3 | 11.3 | 11.3 |
| Water/binder ratio | 0.3 | 0.3 | 0.3 | 0.3 | 0.3 |
| Mass of a volume unit [Kg/m³] | 2400 | 2380 | 2390 | 2030 | 2100 |

Features of the mortars:
Mortar 1: sulfoaluminous binder
Mortar 2: sulfoaluminous binder + aggregate variation + superfluidifying agent change
Mortar 3: sulfoaluminous binder + fibres
Mortar 4: sulfoaluminous binder + aggregate variation + superfluidifying agent change
Mortar 5: traditional binder

### 3. Compressive strength tests

With the above described mortars 1-5, some prism-shaped test pieces were obtained for measuring the compressive or bending strength according to the method described in rule UNI EN 196/1

The obtained results are described in the following table.

**Table 6 Mechanical resistance values (MPa)**

| | **Mortar 1** | **Mortar 2** | **Mortar 3** | **Mortar 4** | **Mortar 5** |
|---|---|---|---|---|---|
| | | | | | |
| 24 h compressive strength | 22 | 9 | 20 | 12 | 15 |
| 7d compressive strength | 120 | 105 | 115 | 100 | 92 |
| 28d compressive strength | 130 | 120 | 125 | 105 | 112 |
| | | | | | |
| 24 h bending strength | 4 | 2.5 | 3 | 2.2 | 2 |
| 7d bending strength | 17 | 16.5 | 16 | 10 | 12 |
| 28d bending strength | 18 | 18 | 18.1 | 17 | 14 |

It is observed that mortars 1-3 have an optimum development of strengths, especially early ones, which remain on average of the same level despite the variations imposed to the compositions. Mortar 4, in which the aggregates with X₀ > 0.5 are granulometrically less distinct than those with X₀ < 0.5, has slightly lower strengths, yet within the norm limits. A similar strength reduction, also within the norm limits, is observed for mortar 5.

### 4. Comparative mortar MBVS (according to the patent application MI 2004 A000226)

In accordance with to the patent application MI 2004 A000226, the comparative mortar MBVS was prepared using the composition reported in table 9, which also shows the relevant compressive strengths measured as described at point 3; the mortar contains the aggregate AG4, whose granulometric fractions and relevant distributions are reported in tables 7-8.

**Table 7: Granulometric distribution of the fractions A, B, C, D.**

| **Diameter (mm)** | **A** | **B** | **C** | **D** |
|---|---|---|---|---|
| 3.15 | 100 | 100 | 100 | 100 |
| 2 | 100 | 100 | 63.2 | 100 |
| 1.6 | 100 | 100 | 30.6 | 100 |
| 1 | 100 | 99.3 | 2.1 | 100 |
| 0.5 | 100 | 13.5 | 1.2 | 100 |
| 0.25 | 49.4 | 1.4 | 0.7 | 78.9 |
| 0.2 | 21.1 | 1.1 | 0.5 | 59.6 |
| 0.125 | 3.1 | 0.7 | 0.2 | 5.5 |
| 0.075 | 0.8 | 0.4 | 0.1 | 0 |
| 0.051 | 0 | 0 | 0 | 0 |

**Table 8: composition of the aggregate AG4**

| | **Aggregate fractions** | | | |
|---|---|---|---|---|
| | **A** | **B** | **C** | **D** |
| X₀ | 0.27 | 0.73 | 2 | 0.23 |
| % content in bulk in the aggregate solid mixture | 56.7 | 13.3 | 20 | 10 |

**Table 9: Composition of the mortar MBVS and compressive strength**

| | | |
|---|---|---|
| CEM I 52.5 R [%] | | 33.4 |
| Slurry of silica fume (dry substance) [%] | | 1.5 |
| Slag [%] | | 8.7 |
| Aggregate AG4 [%] | | 43.6 |
| Acrylic superfluidifying agent (dry substance) [%] | 0.17 | |
| Water [%^{]} | 12.6 | |
| Water/binder ratio | 0.29 | |
| Mass of a volume unit [Kg/m³] | 2276 | |
| Compressive strength **(on prisms according to UNI EN 196/1) [MPa** | **24 h** | 34 |
| | **7 d** | 94 |
| | **28 d** | 105 |
| **Bending strength (on prisms according to UNI EN 196/1) [MPa]** | **24 h** | 3 |
| | **7 d** | 12 |
| | **28 d** | 16 |

With reference to the composition of AG4 it is noted that the total percentage of the fractions A,D with X₀ < 0.5 is equivalent to the one used in the aggregates AG1-3 of the invention; the same goes for the total percentage of the fractions B,C with X₀ > 0.5. However, differently from the present invention, the fractions A,D with X₀ < 0.5 are present in amounts being very different from each other, and the same goes for the fractions B,C with X₀ > 0.5.

As a result, a general reduction of the strengths is observed, in comparison with mortars 1-5 of the invention. In particular there is a clear reduction (10-20%) of long-term compressive strengths (7d, 28 d), and this indicates the formation of a less resistant final product.

### 5. Comparative mortar MBV (according to the patent application MI 2004 A000227)

In accordance with the patent application MI 2004 A000227, the comparative mortar MBV was prepared using the composition reported in table 12, which also reports the relevant compressive strengths measured as described at point 3; the mortar contains the aggregate AG5, whose granulometric fractions and relevant distributions are reported in tables 10-11.

**Table 10: Granulometric distribution of the fractions A, B.**

| **Diameter (mm)** | **A** | **B** |
|---|---|---|
| 1.6 | 100 | 100 |
| 1 | 100 | 99.3 |
| 0.5 | 100 | 13.5 |
| 0.25 | 49.4 | 1.4 |
| 0.2 | 21.1 | 1.1 |
| 0.125 | 3.1 | 0.7 |
| 0.075 | 0.8 | 0.4 |
| 0.051 | 0 | 0 |

**Table 11: composition of the aggregate AG5**

| | **Aggregate fractions** | |
|---|---|---|
| | **A** | **B** |
| X₀ | 0.27 | 0.73 |
| % content in bulk in the aggregate solid mixture | 49 | 51 |

**Table 12: Composition of the mortar MBV and compressive strength**

| | | |
|---|---|---|
| CEM I 52.5 R [%] | 19.8 | |
| Scatto (calcium fluoroaluminate -based quick setting binder) [%] | 18.6 | |
| Anhydrite [%] | 1.49 | |
| Slurry of silica fume (dry substance) [%] | 0.9 | |
| Citric acid (1) [%] | 0.12 | |
| Aggregate AG5 [%] | 44.20 | |
| Acrylic superfluidifying agent (dry substance) [%] | 0.48 | |
| Water [%] | 14.40 | |
| Water/binder ratio | 0.35 | |
| Mass of a volume unit [Kg/m³] | 2214 | |
| **Compressive strength (on prisms according to UNI EN 196/1) [MPa** | **3 h** | 11.4 |
| | **8 h** | 15.6 |
| | **24 h** | 19.0 |
| | **7 d** | 65.6 |
| | **28 d** | 77.3 |

| | | |
|---|---|---|
| (1) Added in water solution to 50% by weight | | |

With reference to the composition of AG5 it is noted that, differently from the aggregates AG1-3 of the invention, only one fraction A with X₀ < 0.5 and only one fraction B with X₀ > 0.5 are present.

With reference to the performances, a general reduction of the resistances is observed, in comparison with the mortars 1-5 of the invention. In particular there is a very clear reduction (about 40%) of long-term compressive strengths (7d, 28 d).

### 6. Junctions obtained by pouring in molds

The mortars at the green state, obtained as above described, were poured, through a suitable gate, in molds having a suited geometry for the preparation of junctions. The high fluidity allows the mold to be filled in homogeneously, even without applying vibrations to consolidate the poured mass. After 24 hours the article of manufacture was removed from the mold and submitted to the seasoning step, in vertical position, in a chamber conditioned at 20°C and 55% of relative humidity.

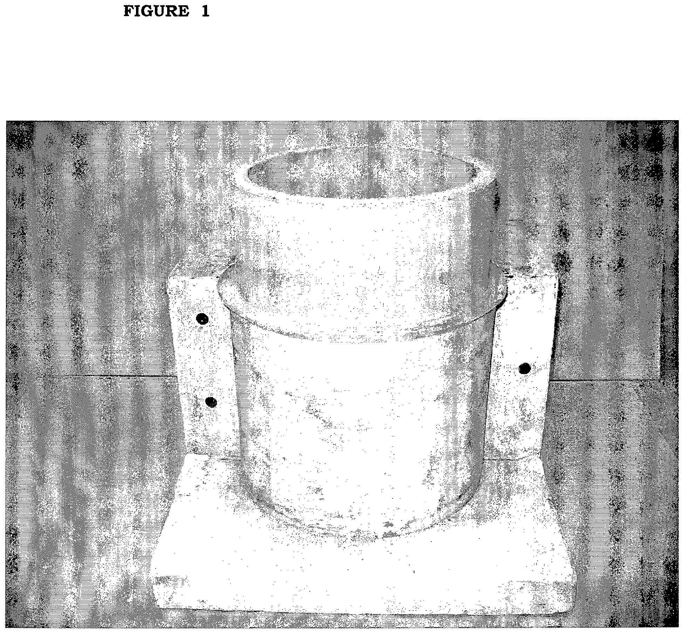

Cementitious junctions with a fine shape and small thickness (see the example of figure 1) are thus produced, meeting the mechanical performances required by the rule UNI EN 588-1, as describe hereafter.

### 6.1 Acid resistant junction (Mortar 1)

With the formulation of Mortar 1 indicated in Table 5. junctions for tubes of inner nominal diameter (DN) of 200 mm and thickness of 16 mm and 18 mm were obtained. The formulation, despite the high content of "fine" aggregates (X₀ < 0.5), has a high fluidity, measured according to the rule UNI EN 1015-3 "Determination of the consistency of the green mortar (by means of a concussion table)" without the help of vibrations, as reported in table 13. This fluidity is kept for at least 60 minutes, allowing to pour the mortar in open molds, even of complex geometric shapes and small thicknesses, such as for example junctions and bends for tubes, with no difficulty.

**Table 13: Measure of the spreading**

| **Time (min)** | **Spreading (mm)** |
|---|---|
| 0 | 307 |
| 5 | 301 |
| 10 | 301 |
| 20 | 295 |
| 30 | 291 |
| 45 | 282 |
| 60 | 278 |

The formulation was poured in a silicone mold obtaining an aesthetically very valid article of manufacture (joint), with a smooth surface and free from defects/surface roughnesses; in this way it was possible to obtain pieces with very small thicknesses and high mechanical performances. The optimum surface finish was obtained also due to the high presence of fine aggregates in the mixture.

The mechanical features of the obtained junction allow it to be included in the highest resistance class (120) provided by the rule UNI EN 588-1 for such articles of manufacture *"Tubes of fiber-cement for sewage and discharge* systems". This rule provides 3 classes of resistance in increasing order, 60-90-120: an article of manufacture, to be included in those classes, must have a minimum compressive strength, expressed in KN/m, equal to the product of the class of resistance for the nominal diameter DN; according to this indication, a junction with a DN of e.g. 200 mm, can be included in the highest class of resistance (120) if it has a compressive strength of at least 24 KN/m. Specifications about the thickness of the junction are not indicated in the rule, but the latter is conventionally used with a thickness corresponding to that of the tube or 20% higher at most for the same DN (typically for DN of 200 mm the desired tube thickness is 14 mm, thus the junction can have a thickness up to 17 mm), but the same class of mechanical resistance is required.

By way of example the values obtained for two junctions obtained with the formulation of Mortar 1, with a thickness of 16 mm and 18 mm respectively, are reported in table 14.

**Table 14: Mechanical performances of the junctions**

| | | |
|---|---|---|
| **DN 200 thickness** | 18 mm | 16 mm |
| **Maximum Load (KN/m)** | 32 | 26 |
| **Class** | **>>** 120 | 120 |

### Acid etching resistance

Together with the high mechanical performances the obtained junctions have excellent features of resistance to chemical etching by sulphuric acid solutions; in fact after dipping for 48 hours in H₂SO₄ solution (0.5 mol/1, pH~ 1) a weight loss of only 0.4% was observed.

### 6.2 Acid-resistant junction with fibers (Mortar 3)

With the formulation of the Mortar 3 indicated in Table 5, junctions for tubes with an inner nominal diameter (DN) 200 and a thickness of 16 mm and 18 mm were obtained. The formulation, despite the high content of "fine" aggregates (X₀ < 0.5) and the presence of fibers, has a high fluidity, measured according to the rule UNI EN 1015-3 "Determination of the consistency of the green mortar (by means of a concussion table)" without the help of vibrations, as reported in table 15. This fluidity is kept for at least 60 minutes and it allows pourings in open molds to be performed, even of complex geometric shapes and with small thicknesses, for example junctions and bends for tubes, with no difficulties.

**Table 15 Measure of the spreading**

| **Time (min)** | **Spreading (mm)** |
|---|---|
| 0 | 288 |
| 5 | 276 |
| 10 | 277 |
| 20 | 266 |
| 30 | 250 |
| 45 | 242 |
| 60 | 227 |

The formulation was poured in a silicone mold obtaining an aesthetically very valid article of manufacture (joint), with a smooth surface and free from defects/surface roughnesses; in this way it was possible to obtain pieces with very small thicknesses and high mechanical performances.

The mechanical features of the obtained junction allow it to be included in the highest resistance class (120) provided by the rule UNI EN 588-1 for those articles of manufacture *"Tubes of fiber-cement for sewage and discharge systems".*

By way of example the values obtained for two junctions obtained with the formulation of Mortar 3, with a thickness of 16 and 18 mm respectively, are reported in table 16.

**Table 16 Mechanical performances of the junctions**

| **DN 200 thickness** | **18 mm** | **16 mm** |
|---|---|---|
| Maximum Load (KN/m) | 30 | 25 |
| Class | >> 120 | 120 |

Together with the high mechanical performances the obtained junctions have a reduced brittleness during the compressive breaking in comparison with those obtained in the example 4 .

### 6.3 Junction without acid resistance (Mortar 5)

With the formulation of the Mortar 5 indicated in table 5 junctions for tubes with an inner nominal diameter (DN) 200 and a thickness of 18 mm were obtained. The high-fluidity formulation allowed to obtain junctions with the mechanical performances shown in table 17.

**Table 17 Mechanical performances of the junctions**

| **DN 200 thickness** | **18 mm** |
|---|---|
| Maximum Load (KN/m) | 26 |
| Class | 120 |

### Acid etching resistance

The obtained junctions do not show a resistance to the attack by chemical agents like sulphuric acid, in fact, after dipping for 48 hours in H₂SO₄ solution (0.5 mol/1, pH~ 1) a weight loss of 6% was observed.

### 6.4 Junction without acid resistance (Reference mortar MBVS)

With the formulation of the reference mortar MBVS described in table 9, junctions for tubes with an inner nominal diameter (DN) 200 and a thickness of 16 mm and 18 mm has been obtained. The formulation, despite the high fluidity, did not allow to obtain junctions with convenient mechanical performances, as shown in table 18.

**Table 18 Mechanical performances of the junctions**

| **DN 200 thickness** | **18 mm** | **16 mm** |
|---|---|---|
| Maximum Load (KN/m) | 14 | 10 |
| Class | 60-90 | < 60 |

### Resistance to acid etching

The obtained junctions do not show a resistance to the attack of chemical agents like sulphuric acid, in fact, after dipping for 48 hours in a H₂SO₄ solution (0.5 mol/1, at pH~ 1) a weight loss of 7% was observed.

## Claims

1. Cement composition comprising:
(i) a hydraulic binder,
(ii) an aggregate resulting from the mixing of:
a. at least two fractions, present in substantially equal amounts, having an average diameter X₀ > 0.5 mm, representing as a whole from 20 to 50% by weight of the total aggregate;
b. at least two fractions, present in substantially equal amounts, having an average diameter X₀ < 0.5 mm, representing as a whole from 50 to 80% by weight of the total aggregate,
wherein the term "substantially equal" defines fractions being present in amounts equal to each other, or variable within a maximum interval of ± 3% by weight of the total aggregate,
wherein said fractions (a) differ from each other by at least 0.1 unit of X₀,, and said fractions (b) differ from each other by at least 0.1 unit of X₀.

2. Composition according to claim 1, wherein the fractions described in (ii) a. are selected from those having an average diameter X₀: 0.73, 1.29, 1.80, and the fractions described in (ii) b. are selected from those having an average diameter X₀: 0.27, 0.42, those values having a tolerance of ± 0.07.

3. Composition according to claims 1-2, wherein the fractions described in a. represent from 30 to 40% by weight of the aggregate, and the fractions described in b. represent from 60 to 70% by weight of the aggregate.

4. Composition according to claims 1-3, wherein the fractions described in a represent 34.5 ± 3.0% by weight of the aggregate, and the fractions described in b. represent 65.5 ± 3.0% by weight of the aggregate.

5. Composition according to claims 1-4, wherein the aggregate is based on limestone, silica-limestone, quartz or marble.

6. Composition according to claims 1-5, wherein the hydraulic binder is a sulfoaluminous binder.

7. Composition according to claims 1-6, comprising:
from 25 to 50 parts by weight of binder (i)
from 40 to 60 parts by weight of aggregate (ii)

8. Composition according to claims 1-7, comprising from 35 to 40 parts by weight of binder (i)
from 45 to 55 parts by weight of aggregate (ii)

9. Composition according to claims 1-8 containing from 0.05 to 1.00 parts by weight of a superfluidifying agent.

10. Composition according to claims 1-9 comprising from 5 to 15 parts by weight of water.

11. Composition according to claim 10, in the form of cement mortar.

12. Cementitious junction made in-bulk of the composition described in claims 1-11.

13. Cementitious junction according to claim 12, having thickness comprised between 10 and 50 mm.

14. Cementitious junction according to claims 12-13, connected to one or more conduct-forming tubes.

15. Use of a composition according to claims 1-11 for the preparation of the cementitious junction described in claims 12-14.

16. Use according to claim 15, wherein said junction is used for underground applications, particularly for transporting sewage.

17. Process for the preparation of a cementitious junction according to claims 12-14, including pouring into molds the composition described in claims 1-11, in fluid form.

## Patentansprüche

1. Zementzusammensetzung umfassend:
(i) ein hydraulisches Bindemittel
(ii) einen Zuschlag resultierend aus der Vermischung von:
a. zumindest zwei Fraktionen, welche in im Wesentlichen gleichen Mengen vorhanden sind, die einen durchschnittlichen Durchmesser X₀ > 0,5 mm aufweisen, welche im Ganzen 20 bis 50 Gewichts-% von dem gesamten Zuschlag darstellen;
b. zumindest zwei Fraktionen, welche in im Wesentlichen gleichen Mengen vorhanden sind, die einen durchschnittlichen Durchmesser X₀ < 0,5 mm aufweisen, welche im Ganzen 50 bis 80 Gewichts-% von dem gesamten Zuschlag darstellen,
wobei der Ausdruck "im Wesentlichen gleich" Fraktionen festlegt, welche in Mengen vorhanden sind, die gleich zueinander oder variabel innerhalb eines maximalen Intervalls von ± 3 Gewichts-% des gesamten Zuschlags sind,
wobei die Fraktionen (a) sich voneinander durch zumindest 0,1 der Einheit von X₀ unterscheiden, und die Fraktionen (b) sich voneinander durch zumindest 0,1 der Einheit von X₀ unterscheiden.

2. Zusammensetzung nach Anspruch 1, wobei die Fraktionen, die in (ii) a. beschrieben sind, aus einem von diesen ausgewählt sind, die einen durchschnittlichen Durchmesser X₀: 0,73, 1,29, 1,80 aufweisen und die Fraktionen, die in (ii) b. beschrieben sind, aus einem von diesen ausgewählt sind, welche einen durchschnittlichen Durchmesser X₀: 0,27, 0,42 aufweisen, wobei diese Werte eine Toleranz von ± 0,07 aufweisen.

3. Zusammensetzung nach den Ansprüchen 1-2, wobei die Fraktionen, die in a. beschrieben sind, 30 bis 40 Gewichts-% von dem Zuschlag darstellen, und die Fraktionen, die in b. beschrieben sind 60 bis 70 % Gewichts-% von dem Zuschlag darstellen.

4. Zusammensetzung nach den Ansprüchen 1-3, wobei die Fraktionen, die in a. beschrieben sind, 34,5 ± 3,0 Gewichts-% von dem Zuschlag darstellen, und die Fraktionen die in b. beschrieben sind, 65,5 ± 3,0 Gewichts-% von dem Zuschlag darstellen.

5. Zusammensetzung nach den Ansprüchen 1-4, wobei der Zuschlag auf Kalk, Siliziumdioxid-Kalk, Quarz oder Marmor basiert.

6. Zusammensetzung nach den Ansprüchen 1-5, wobei das hydraulische Bindemittel ein sulfo-aluminiumhaltiges Bindemittel ist.

7. Zusammensetzung nach den Ansprüchen 1-6, umfassend:
25 bis 50 Gewichtsteile des Bindemittels (i)
40 bis 60 Gewichtsteile des Zuschlags (ii).

8. Zusammensetzung nach den Ansprüchen 1-7, umfassend:
35 bis 40 Gewichtsteile des Bindemittels (i)
45 bis 55 Gewichtsteile des Zuschlags (ii).

9. Zusammensetzung nach den Ansprüchen 1-8, beinhaltend 0,05 bis 1,00 Gewichtsteile von einem superverflüssigenden Mittel.

10. Zusammensetzung nach den Ansprüchen 1-9, umfassend 5 bis 15 Gewichtsteile von Wasser.

11. Zusammensetzung nach Anspruch 10, in der Form von Zementmörtel.

12. Zementartige Verbindung welche en gros aus der Verbindung hergestellt wurde, die in den Ansprüchen 1-11 beschrieben ist.

13. Zementartige Verbindung nach Anspruch 12, welche eine Dicke umfassend zwischen 10 und 50 mm aufweist.

14. Zementartige Verbindung nach den Ansprüchen 12-13, verbunden mit einer oder mehreren Führungsformrohren.

15. Verwendung einer Verbindung gemäß den Ansprüchen 1-11 zur Erstellung der zementartigen Verbindung, welche in den Ansprüchen 12-14 beschrieben ist.

16. Verwendung nach Anspruch 15, wobei die Verbindung für Untergrundanwendungen, insbesondere für Abwassertransport, verwendet wird.

17. Verfahren für die Erstellung einer zementartigen Verbindung nach den Ansprüchen 12-14, beinhaltend das Gießen der Verbindung, welche in den Ansprüchen 1-11 beschrieben ist, in flüssiger Form in Formen.

## Revendications

1. Composition de ciment comprenant :
(i) un liant hydraulique,
(ii) un agrégat résultant du mélange de :
a. au moins deux fractions, présentes en quantités sensiblement égales, ayant un diamètre moyen X₀ > 0,5 mm, représentant dans l'ensemble de 20 à 50 % en poids de l'agrégat total ;
b. au moins deux fractions, présentes en quantités sensiblement égales, ayant un diamètre moyen X₀ < 0,5 mm, représentant dans l'ensemble de 50 à 80 % en poids de l'agrégat total,
dans laquelle le terme « sensiblement égales » définit des fractions étant présentes en des quantités égales l'une à l'autre, ou variables dans un intervalle maximal de ± 3 % en poids de l'agrégat total,
dans laquelle lesdites fractions (a) diffèrent l'une de l'autre d'au moins 0,1 unité de X₀, et lesdites fractions (b) diffèrent l'une de l'autre d'au moins 0,1 unité de X₀.

2. Composition selon la revendication 1, dans laquelle les fractions décrites en (ii) a. sont choisies parmi celles ayant un diamètre moyen X₀ : 0,73, 1,29, 1,80, et les fractions décrites en (ii) b. sont choisies parmi celles ayant un diamètre moyen X₀ : 0,27, 0,42, ces valeurs ayant une tolérance de ± 0,07.

3. Composition selon les revendications 1 à 2, dans laquelle les fractions décrites en a. représentent de 30 à 40 % en poids de l'agrégat, et les fractions décrites en b. représentent de 60 à 70 % en poids de l'agrégat.

4. Composition selon les revendications 1 à 3, dans laquelle les fractions décrites en a. représentent 34,5 ± 3,0 % en poids de l'agrégat, et les fractions décrites en b. représentent 65,5 ± 3,0 % en poids de l'agrégat.

5. Composition selon les revendications 1 à 4, dans laquelle l'agrégat est à base de calcaire, de silice-calcaire, de quartz ou de marbre.

6. Composition selon les revendications 1 à 5, dans laquelle le liant hydraulique est un liant sulfoalumineux.

7. Composition selon les revendications 1 à 6, comprenant :
de 25 à 50 parties en poids de liant (i)
de 40 à 60 parties en poids d'agrégat (ii)

8. Composition selon les revendications 1 à 7, comprenant
de 35 à 40 parties en poids de liant (i)
de 45 à 55 parties en poids d'agrégat (ii)

9. Composition selon les revendications 1 à 8 contenant de 0,05 à 1,00 partie en poids d'un agent superfluidifiant.

10. Composition selon les revendications 1 à 9 comprenant de 5 à 15 parties en poids d'eau.

11. Composition selon la revendication 10, sous la forme de mortier de ciment.

12. Jonction cimentaire intégralement constituée de la composition décrite dans les revendications 1 à 11.

13. Jonction cimentaire selon la revendication 12, ayant une épaisseur comprise entre 10 et 50 mm.

14. Jonction cimentaire selon les revendications 12 à 13, reliée à un ou plusieurs tubes formant conduites.

15. Utilisation d'une composition selon les revendications 1 à 11 pour la préparation de la jonction cimentaire décrite dans les revendications 12 à 14.

16. Utilisation selon la revendication 15, dans laquelle ladite jonction est utilisée pour les applications souterraines, en particulier pour le transport des eaux d'égout.

17. Procédé de préparation d'une jonction cimentaire selon les revendications 12 à 14, incluant le coulage dans des moules de la composition décrite dans les revendications 1 à 11, sous forme fluide.
